# EUROPEAN PATENT SPECIFICATION

(11) **EP 4 470 759 B1**
(45) Date of publication and mention of the grant of the patent: **01.07.2026**
(21) Application number: 24174435.8
(22) Date of filing: 07.05.2024
(51) Int. Cl.: B29C 65/08, B65B 51/22, B65B 51/30, B29C 65/74, B29L 31/00

(54) **ULTRASONIC SEALING SYSTEM AND ANVIL THEREOF**
ULTRASCHALLVERSIEGELUNGSSYSTEM UND AMBOSS DAFÜR
SYSTÈME DE SCELLEMENT PAR ULTRASONS ET ENCLUME ASSOCIÉE

(30) Priority: 12.05.2023 IT 202300009540
(43) Date of publication of application: 04.12.2024
(73) Proprietor: Tetra Laval Holdings & Finance S.A., 1009 Pully (CH)
(72) Inventor: Amenta, Adriana, 41123 Modena (IT); Gentili, Luca, 41123 Modena (IT)
(74) Representative: Tetra Pak Patent Attorneys

(56) References cited:
- US-A1- 2010 236 197
- US-A1- 2019 202 587

## Description

### Technical field

The present invention relates to the field of packaging technology. More particularly, it is related to an ultrasonic sealing system and anvil thereof, as well as a method for transversal sealing a tube of packaging material using said ultrasonic sealing system.

### Background of the invention

Ultrasonic sealing technology, sometimes referred to as ultrasonic welding technology, has for many years been widely used within the food packaging industry for sealing carton packages. The ultrasonic sealing is formed by applying a pressure and generating heat by inducing ultrasonic oscillations in to the area to be sealed. This is commonly achieved by pressing the packaging material between an oscillating transducer and an anvil. The oscillations generates heat in the area which in turn causes a plastic of the packaging material to melt. The applied pressure fuses together the packaging material so as to form an hermetic seal. The generated heat is dependent on the amount of applied pressure, the distribution of the applied pressure and the oscillation amplitude. Together with further parameters, such as a sealing time and sealing energy, these need to be controlled in order to achieve a desirable seal.

An advantage with using the ultrasonic sealing technology compared to induction sealing technology, sometimes referred to as induction heating technology, is that the ultrasonic sealing technology does not require an electrically conductive material in the packaging material, such as an Aluminum foil. Thus, making the packaging material more cost-efficient and environmentally friendly.

In roll-fed packaging machines, the ultrasonic sealing technology is typically used for forming transversal seals, i.e., welds in a lower part of a tube of packaging material filled with food product, such that packages can be formed. The tube is in turn formed by joining two edges of a web of packaging material by a longitudinal seal. Because of the package design, the area to be sealed it not entirely flat, nor symmetrical. For instance, there is a region where the transversal sealing crosses the longitudinal sealing resulting in the thickness of the tube being three layers thick.

The design of the anvil to handle such deviations is critical to the performance of the sealing system. Any defects in the transversal sealing can have severe effects on the food safety of the package. Therefore, there is a need for a further improved anvil design that can provide more consistent and reliable sealing performance. Documents US2019/202587 A1 and US2010/236197 A1 may be examples of known anvils according to the preamble of claim 1 of the present invention.

### Summary of the invention

The herein disclosed technology seeks to at least partly mitigate, alleviate or eliminate one or more of the above-mentioned deficiencies and disadvantages in the prior art. In particular, it is an object to provide an improved ultrasonic sealing system and anvil thereof. The present inventive concept further relates to a packaging machine comprising the ultrasonic sealing system, and a method for operating the ultrasonic sealing system.

To improve sealing performances in roll fed packaging machines, a region of the anvil corresponding to the cross between the transversal sealing and the longitudinal sealing (TS-LS cross) is commonly adapted in some way to compensate for the varying thickness of the tube, such as by providing a number of teeth which forms local peaks in pressure and heat generation in the packaging material. The design of the anvil is then constant over the remaining part over the width of the tube. However, the inventors have realized that improvements to the sealing performance can also be achieved in the peripheral sections of the tube, outside the TS-LS cross. As a result, the present inventive concept provides for an anvil with improved sealing performance over the entire width of the tube, and in particular in the peripheral sections of the tube, outside the TS-LS cross.

Various aspects and embodiments of the disclosed invention are defined below and in the accompanying independent and dependent claims.

According to a first aspect, there is provided an anvil of an ultrasonic sealing system for transversally sealing a tube of packaging material. The anvil comprises a ridge extending along a transversal direction, TD, of the anvil. The ridge comprises a mid-section. The ridge further comprises a first and a second peripheral section, arranged on either side of the mid-section. The first and second peripheral section comprise a respective first sub-portion and a second sub-portion. The respective first sub-portion is placed between the mid-section and the respective second sub-portion. The first sub-portion of the ridge is offset in a longitudinal direction, LD, of the anvil by a first distance, D1, from the mid-section. The second sub-portion of the ridge is offset in the longitudinal direction of the anvil by a second distance, D2, from the mid-section. The first distance, D1, is different from the second distance, D2.

By having the first and second peripheral section divided into a respective first and second sub-portion being offset each other provides for that different characteristic of these regions can be met. Put differently, making it possible to achieve an improved sealing in view of variations in the packaging material in these regions. For instance, effects of a longitudinal sealing of the tube can be handled in an improved manner during a transversal sealing process.

The improved anvil may be further advantageous in that it facilitates an improved pressure and heat pattern over the entire tube. It may further increase robustness in areas where fin corners, flaps and/or crease lines are present, as well as at an edge of the tube.

Even further, having the offset in the longitudinal direction may reduce the risk of overheating, or ruptures in the packaging material, by spreading out the generated heat/pressure in the longitudinal direction. This way, different regions of the tube (e.g. a TS-LS cross region, a crease line region, or an corner/edge region of the tube) that may need to be treated differently during the sealing process may have less impact on each other. For instance, a crease line region can be provided with a localized higher (or lower) pressure and heat generation without (or only to a less extent) affecting a pressure and heat generation in a neighboring region.

The packaging material may comprise a paperboard layer and a plastic foil attached to the paperboard layer. The paperboard layer has the advantageous effect of being compressible, while the plastic foil (also herein referred to as plastic layer) can be melted by ultrasonic vibrations to form the transversal sealing. Thus, the packaging material may be void of Aluminum. Aluminum is otherwise commonly used when the transversal sealing is formed by sealing systems based on induction heating. Without the Aluminum layer, the packaging material can be made more cost-efficient and more environmentally friendly. Thus, an indirect effect of the anvil and the sealing system described is that more environmentally friendly packaging can be achieved.

The first and second peripheral section may further comprise a respective first transition section abutting the mid-section. A combined transversal length of the first transition section of the first and second peripheral section may be greater than a transversal length of the mid-section. The transversal length of the respective first transition section may be defined by dimensions of the package to be formed. Similarly, the transversal length of the mid-section may be defined by dimensions of the TS-LS cross.

The second distance, D2, is smaller than the first distance, D1. In other words, the first sub-portion, being the sub-portion closest to the mid-section, may have a greater offset from the mid-section, than the second sub-portion.

The second distance, D2, may be zero. Having the second distance D2 equal to zero (i.e. aligned with the mid-section) may simplify manufacturing, while still achieving an offset between the first and second sub-portions.

At least one of a height, a width, and a slope angle of the second sub-portion of the ridge may be different from a height, a width, and a slope angle the first sub-portion of the ridge.

By having different ridge design in the different sub-portions may further improve the sealing performance in regards to variations in the tube.

A transversal length of the first and second sub-portion, respectively, may be set such that the respective first sub-portion may be arranged to compensate for longitudinal crease lines of the tube, and the respective second sub-portion may be arranged to compensate for an edge of the tube, during a transversal sealing state By transversal sealing state it is herein meant the operational state of the ultrasonic sealing system. Put differently, the transversal sealing state refers to the process of forming the transversal sealing.

A possible associated advantage is that the sealing at a region around the crease lines and edges of the tube, may be improved.

The transversal length of the first and second sub-portion may be further set such as to compensate for an edge of the tube.

At a region around the edge of the tube, the tube may be slightly thicker due to how it is folded. Put differently, a rigidity of the packaging material provides for that the two sides of packaging material are pushed away from each other close to the edge in which an U-bent folding is made.

Transversal lengths of the first and second sub-portion, respectively, may be set based on a structural property of the packaging material of the tube. By having the transversal lengths adapted to the packaging material in this manner, more reliable transversal sealing can be achieved compared to the approach commonly used today in which properties of ultrasonic waves are adjusted without having the anvil being designed in different ways to e.g. meet different structural properties. Structural properties of the packaging material may be e.g. thickness, rigidity, number of material layers, type of material layers etc.

The first and second peripheral section may further comprise a respective second transition section arranged between the respective first sub-portion and the respective second sub-portion of the first and second peripheral section. A respective transversal length of the first transition section may be greater than a respective transversal length of the second transition section.

The first and second peripheral section of the ridge may have a constant height. This may be advantageous for ease of manufacturing.

According to a second aspect, there is provided an ultrasonic sealing system for transversally sealing a tube of packaging material. The ultrasonic sealing system comprises an ultrasonic generating device arranged to transmit ultrasonic vibrations into the tube. The ultrasonic sealing system further comprises an anvil according to the first aspect. The Anvil is arranged opposite to the ultrasonic generating device, such that during a transversal sealing state, the tube is arranged between the ultrasonic generating device and the anvil.

The above-mentioned features of the first aspect, when applicable, apply to this second aspect as well. In order to avoid undue repetition, reference is made to the above.

According to a third aspect, there is provided a packaging machine. The packaging machine comprises a transversal sealing, TS, station for transversally seal and cut a tube of packaging material into packages. The TS station comprises an ultrasonic sealing system according to the second aspect.

The packaging machine may further comprise a packaging material, PM, reel receiver arranged to receive a PM reel. The PM reel holds a web of PM. The PM reel receiver may be equipped with a PM reel ID reader arranged to read a PM reel identification, ID, tag on the PM reel. The TS sealing station may comprise an anvil ID reader arranged to read an anvil ID tag of the anvil, and wherein the packaging machine further comprises a control unit comprising a processor and a memory configured to receive PM reel ID data extracted from the PM reel ID tag, to receive anvil ID data extracted from the anvil ID tag and to compare the PM reel ID data with the anvil ID data to assure that the anvil is matching the packaging material provided via the PM reel.

The above-mentioned features of the first and second aspects, when applicable, apply to this third aspect as well. In order to avoid undue repetition, reference is made to the above.

According to a fourth aspect, there is provided a method performed in a packaging machine for transversally sealing a tube of packaging material using an ultrasonic sealing system according to the second aspect. The packaging material may comprise a paperboard layer and a plastic foil attached to the paperboard layer.

The method comprises providing a transversal sealing section of the tube of packaging material between the ultrasonic generating device and the anvil of the ultrasonic sealing system.

The method further comprises generating, by the ultrasonic generating device of the ultrasonic sealing system, ultrasonic vibrations such that the plastic foil of the packaging material in the transversal sealing section at least partly melts.

The method further comprises pressing together the tube in the transversal sealing section between the ultrasonic generating device and the anvil, such that a pressure is formed over the transversal sealing section causing the plastic foil to bond, thereby forming a transversal sealing.

The method may further comprise reading a PM reel identification, ID, tag on a PM reel in the packaging machine by using a PM reel ID reader. The method may further comprise reading an anvil ID tag of the anvil by using an anvil ID reader. The method may further comprise comparing anvil ID data extracted from the anvil ID tag and PM reel ID data extracted from the PM reel ID tag in a control unit. In case of mismatch between the anvil ID data and the PM reel ID data, the method may further comprise transmitting a notification of mismatching anvil and PM.

The method may further comprise, in case of non-match between the anvil ID data and the PM reel ID data, halting production of the packages.

The above-mentioned features of the first, second and third aspects, when applicable, apply to this fourth aspect as well. In order to avoid undue repetition, reference is made to the above.

According to a fifth aspect, there is provided a computer program product comprising instructions, which when the program is executed by a computer, cause the computer to carry out the steps of the method according to the fourth aspect.

The above-mentioned features of the first, second, third and fourth aspects, when applicable, apply to this fifth aspect as well. In order to avoid undue repetition, reference is made to the above.

According to a sixth aspect, there is provided a non-transitory computer-readable storage medium. The non-transitory computer-readable storage medium stores one or more programs configured to be executed by one or more processors of a processing system, the one or more programs comprising instructions for performing the method according to the fourth aspect.

The above-mentioned features of the first, second, third, fourth and fifth aspects, when applicable, apply to this sixth aspect as well. In order to avoid undue repetition, reference is made to the above.

A further scope of applicability of the present disclosure will become apparent from the detailed description given below. However, it should be understood that the detailed description and specific examples, while indicating some variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a general illustration of a packaging machine.
Figure 2 illustrates, by way of example, a package after a transversal sealing.
Figure 3 illustrates, in a cross-sectional view, an ultrasonic sealing system during a transversal sealing state.
Figure 4A illustrates a tube of packaging material from a side view.
Figure 4B illustrates, in cross-section, the tube of packaging material in a top view.
Figure 5A illustrates, by way of a first example, an anvil in perspective view.
Figure 5B illustrates a section of the anvil of Fig. 5A in a front view.
Figure 5C and 5D illustrates different cross sections of the anvil of Fig. 5A.
Figure 6A illustrates, by way of a second example, an anvil in perspective view.
Figure 6B illustrates a section of the anvil of Fig. 6A in a front view.
Figure 6C to 6E illustrates different cross sections of the anvil of Fig. 6A.
Figure 7 is a flow chart illustrating the steps of a method for transversally sealing a tube of packaging material.

### Detailed description

The present inventive concept will now be described more fully hereinafter with reference to the accompanying drawings, in which some variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" or each as an alternative.

It will also be understood that, although the term first, second, etc. may be used herein to describe various elements or features, these elements should not be limited by these terms. These terms are only used to distinguish one element from another. For example, a first peripheral section could be termed a second peripheral section, and, similarly, a second peripheral section could be termed a first peripheral section, without departing from the scope of the embodiments. The first peripheral section and the second peripheral section are both peripheral section, but they are not the same peripheral section.

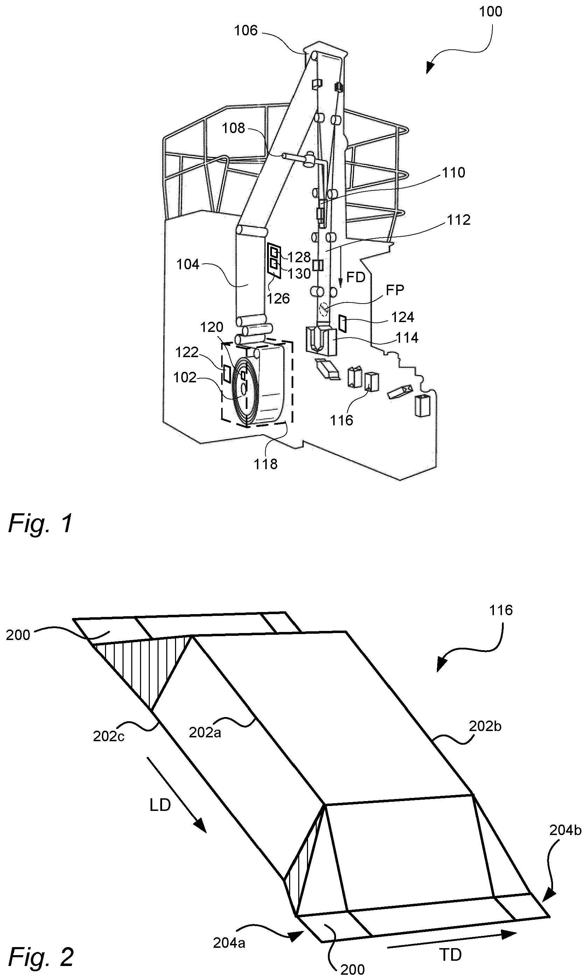

An anvil for an ultrasonic sealing system, an ultrasonic sealing system comprising the anvil, a packaging machine comprising the ultrasonic sealing system and a method for transversally sealing a tube of packaging material using the ultrasonic sealing system will now be described with reference to Fig. 1 to 7.

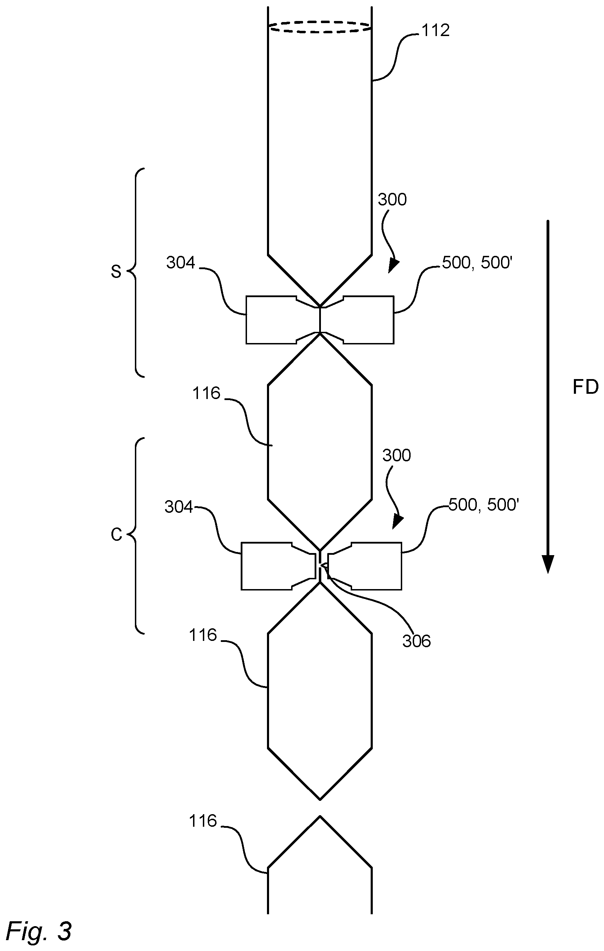

Figure 1 is a general illustration of a packaging machine 100. In the broadest form, the packaging machine 100 comprises a transversal sealing station 114 for transversally seal and cut a tube of packaging material 112 into packages 116. The packaging material may comprise a paperboard layer and a plastic foil. The plastic foil may be attached to the paperboard layer. The transversal sealing station 114 comprises an ultrasonic sealing system 300 as will be further described below in connection with Fig. 3 and Fig. 5A to 7. The packaging machine 100 may be a stand-alone packaging machine, or part of a larger food packaging or processing pipeline.

In the example illustrated in Fig. 1, the packaging machine 100 is a roll-fed packaging machine, the general principles of which will be described in the following. In such a machine, the packaging material is provided on a roll (or reel) 102 of packaging material, loaded into a reel receiver 118 of the packaging machine 100. From the roll 102 of packaging material, a web 104 of packaging material is formed. The web 104 of packaging material may pass through a sterilization station 106 for removing or reducing a number of unwanted microorganisms from the web 104. The sterilization may e.g. comprise a hydrogen peroxide bath, a Low Voltage Electron Beam (LVEB) device or any other suitable apparatus capable of meeting food safety regulations.

After sterilization, the web 104 can be formed into a tube 112, e.g. by a longitudinal sealing station 110. The tube 112 is formed by joining the two edges of the web 104 by a longitudinal sealing, LS. The wording "longitudinal" herein relates to the longitudinal direction of the web 104 or tube 112 of packaging material. Thus, the longitudinal direction coincides with a feeding direction, FD, in the packaging machine 100. When having formed the tube 112, a food product, FP, can be fed into the tube 112 via a product filling pipe 108, arranged at least partly inside the tube 112.

The filled tube 112 then reaches the transversal sealing station 114 comprising the ultrasonic sealing system 300. The wording "transversal" herein relates to a direction across the tube (i.e. a transversal direction, TD) once flattened in the transversal sealing station 114. In the transversal sealing station 114, a transversal sealing, TS, is made in a lower end of the tube 112 by using the ultrasonic sealing system 300. Generally, the ultrasonic sealing system 300 (which is further described below) has two main functions; 1) providing the transversal sealing, i.e. welding two opposite sides of the tube 112 together such that the product in a lower part of the tube 112, placed downward the ultrasonic sealing system 300, is separated from the product in the tube 112 placed upward the ultrasonic sealing system 300, and 2) cutting off the lower part of the tube such that a package 116 is formed. Alternatively, instead of providing the transversal sealing and cutting off the lower part in one and the same system 300 as illustrated, the step of cutting off the lower part may be made in a subsequent step by a different piece of equipment, or by the consumer if the packages are intended to be sold in a multi-pack.

After a package 116 has been formed, it may be folded in a folding station (not shown) thereby forming a finished food package 116.

As shown herein, the reel receiver 118 may be equipped with a reel ID reader 122 arranged to read a reel identification, ID, tag 120 on the reel 102. The reel ID tag 120 may comprise information identifying the reel. For example, the reel ID tag 120 may comprise information indicative of a type of packaging material on the reel 102, material properties of the packaging material (e.g. thickness, material composition, etc.), a type of package to be formed by the packaging material, or packaging machine settings to be used. In other words, the reel ID tag 102 may comprise information about structural properties of the packaging material. The transversal sealing station 114 may in turn comprise an anvil ID reader 124 arranged to read an anvil ID tag 512 of the anvil used in the ultrasonic sealing system 300. The anvil ID tag 512 may comprise information indicative of what anvil is being used.

The packaging machine 100 may further comprise a control unit 126 comprising a processor 128 and a memory 130. The control unit 126 may be configured to receive PM reel ID data extracted from the PM reel ID tag 120, and to receive anvil ID data extracted from the anvil ID tag 512. The control unit 126 may be further configured to compare the PM reel ID data with the anvil ID data to assure that the anvil is matching the packaging material provided via the reel 102. If not matching, the control unit 126 may transmit a notification signal, e.g. to an operator or a control system of the packaging machine 100.

Figure 2 illustrates, by way of example, a package 116 after a transversal sealing has been performed, but before it has been folded into a finished package. As herein shown, the package 116 is sealed in a transversal sealing section 200 spanning over the package from a first edge 204a of the package 116 to a second edge 204b.

Along the longitudinal direction, LD, the package is provided with a number of longitudinal crease lines 202a-c. The crease lines 202a-c should be interpreted as indentions or weakening lines. The crease lines 202a-c are typically embossed onto the packaging material during its manufacturing. The crease lines 202a-c are designed to facilitate folding of the packaging material into its intended shape. For example, as further explained below in connection with Fig. 3, the tube 112 of packaging material is, during a transversal sealing state, formed into a desired shape (e.g. a shape having a rectangular cross section). The crease lines 202a-c may in this case be provided along the corners of the package to ensure that the package is formed accurately and consistently. In the illustrated example, the package 116 comprises a first crease line 202a, a second crease line 202b, a third crease line 202c and a fourth crease line (not shown) corresponding to the four corners of the package 116. However, it should be appreciated that the number of crease lines may be two or more depending on the type or shape of the package 116.

As further shown herein, the crease lines 202a-c extend also over the transversal sealing section 200 where the transversal sealing is to be formed. Thus, as realized by the inventors, the transversal sealing can be improved further if the anvil is modified to take these into account. The tube 112 further comprises a first and second edge 204a, 204b. Due to the folding of the packaging material at the edges 204a, 204b, the inventors has realized that the transversal sealing can be even further improved if the anvil is modified with these regions in mind as well.

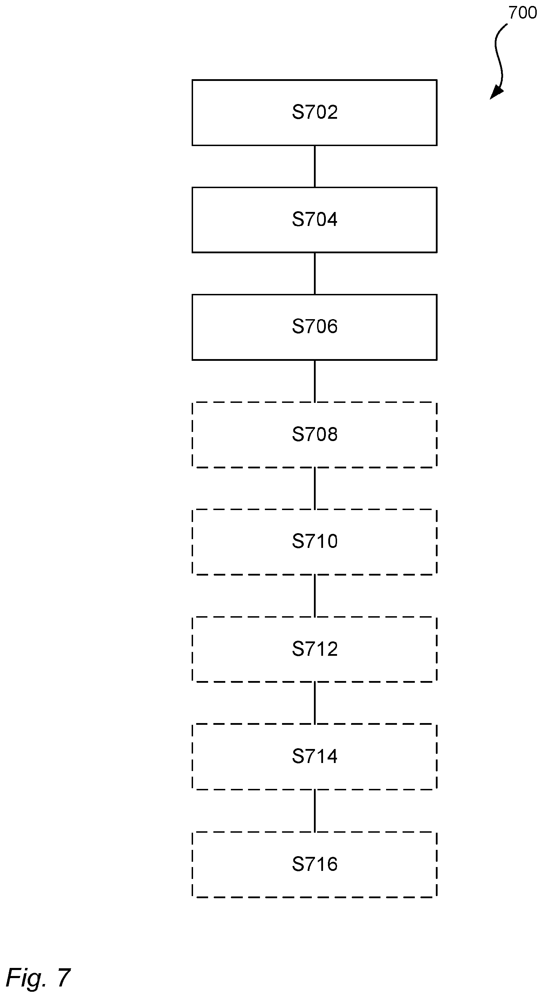

Figure 3 is a cross-sectional view of an ultrasonic sealing system 300. More specifically, Fig. 3 illustrates the general principle of the ultrasonic sealing system 300 and its process in further detail by way of example. The process of operating the ultrasonic sealing system 300 to form a transversal sealing is further described below, in connection with Fig. 7.

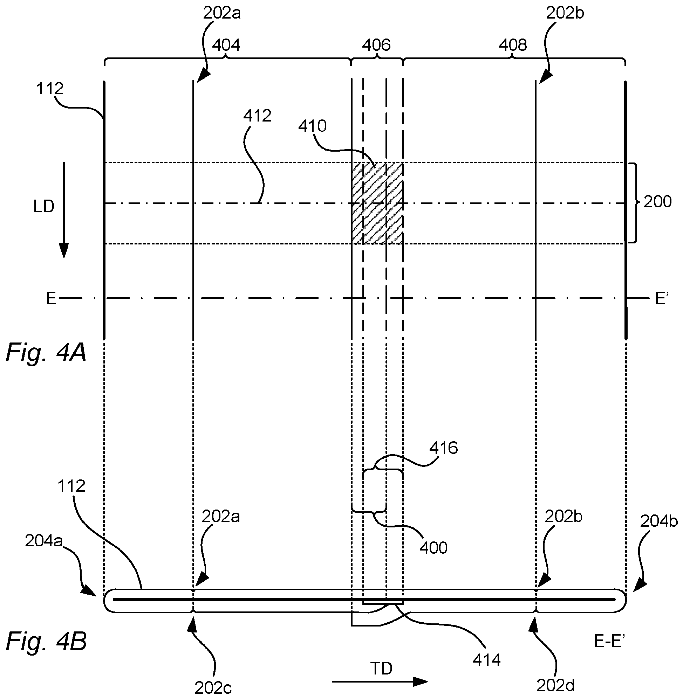

The ultrasonic sealing system 300 is configured for sealing a transversal sealing section 200 of a tube 112 of packaging material. The transversal sealing section 200, which is further illustrated in connection with Fig. 4A and 4B, comprises a first transversal edge section 404, a longitudinal sealing, LS, section 406 and a second transversal edge section 408.

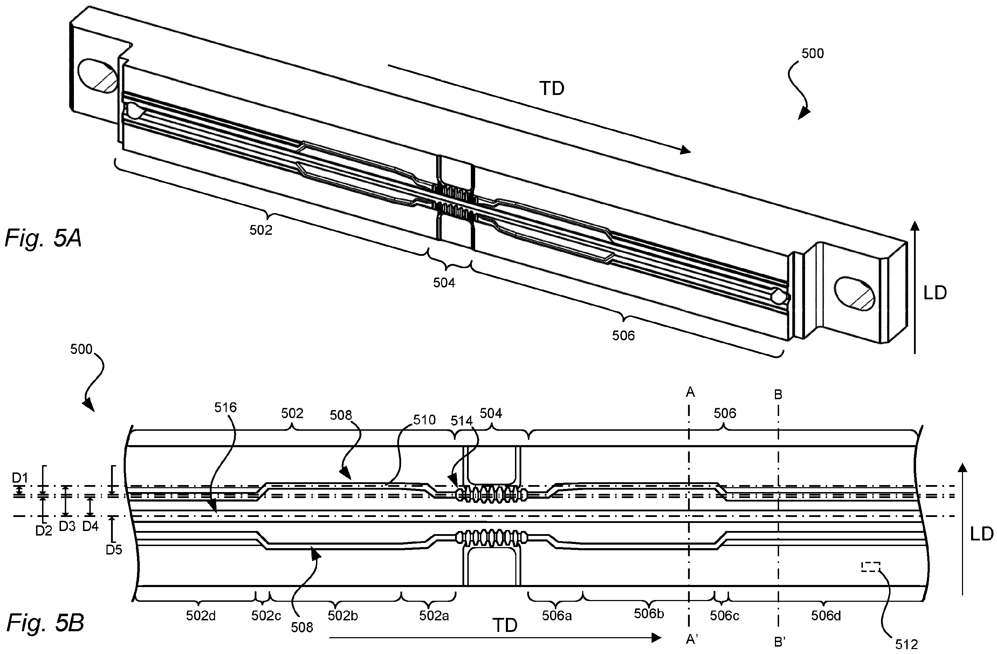

The ultrasonic sealing system 300 comprises an ultrasonic generating device 304 and an anvil 500, 500'. These are further described below, e.g. in connection with Fig. 5A to 6E. The ultrasonic sealing system 300 may comprise a plurality of pairs of ultrasonic generating devices 304 and anvils 500, 500' arranged in a jaw system, for being able to form the transversal sealing without interrupting the continuous movement of the tube 112.

The ultrasonic generating device 304 is arranged to transmit ultrasonic vibrations into the transversal sealing section 200 of the tube 112. Thereby, heat generation may be caused in the packaging material, which in turn causes the plastic material in the transversal sealing section to at least partly melt. The anvil 500, 500' is arranged opposite from the ultrasonic generating device 304 to give a counter force to the ultrasonic generating device 304. Thus, during the transversal sealing state, the tube 112 is arranged between the ultrasonic generating device 304 and the anvil 500, 500'. The pressure between the ultrasonic generating device 304 and the anvil 500, 500' then causes the packaging material to fuse together.

In order to provide for a more controlled forming process of the package 116, the ultrasonic sealing system 300 may further comprise so-called volume forming flaps (not shown). More specifically, the volume forming flaps may be used to steer the tube 112 having a circular cross-section into a package having a rectangular cross-section in a controlled manner.

Turning to the process of the ultrasonic sealing system 300, the tube 112 is preferably fed from above, since this provides for that product can be held inside the tube as illustrated in Fig. 1. In a first stage, a sealing stage S, the ultrasonic generating device 304 and anvil 500, 500' are moved towards each other, in a respective direction opposite from each other, such that two opposite sides of the tube 112 are pressed towards one another. It should be appreciated that either one of the ultrasonic generating device and the anvil may be fixed, such that only the other one is moved.

In order to provide for the transversal sealing, heat is provided in the packaging material by generating ultrasonic acoustic vibrations by the ultrasonic generating device 304. The heat provides for that a plastic layer (may also be referred to as a plastic foil, a polymer layer or a thermoplastic polymer layer) of the packaging material is at least partly melted, which in turn provides for the plastic layer can be used for making sure that the two opposite sides of the tube 112 can attach to each other and stay together after the applied pressure is removed. In a subsequent step, herein referred to as a cutting stage C, the lower part of the tube 112 can be cut off (e.g. by a knife 306) such that the package 116 is formed. In this example, the knife 306 is provided in the anvil 500, 500'. However, the knife 306 may alternatively be provided on the other side of the tube 112, in the ultrasonic generating device 304. Alternatively, the cutting step may be performed by a separate device downstream the ultrasonic sealing system 300.

In order to increase a speed in which packages are formed, the parts of the ultrasonic sealing system (e.g. the ultrasonic generating device 304, the anvil 500, 500' and any other optional parts) can be moved together with the tube 112 in a feeding direction FD during the sealing stage S and the cutting stage C. Thus, the ultrasonic generating device 304 and the anvil 500, 500' illustrated in the sealing state S may be the same as the ultrasonic generating device 304 and the anvil 500, 500' in the cutting state C.

Figure 4A illustrates a tube 112 of packaging material from a side view, in a stage where it is pressed together to form the transversal sealing, TS. The wording "side view" herein refers to the case when the tube 112 is arranged in a vertical direction as seen e.g. in Fig. 3. Thus, it illustrates an outer surface of the tube 112. Figure 4B also illustrates the tube 112, but in cross-sectional view from the top, i.e. in the cross section E-E'. It should be noted that the sizes and proportions of the different sections and areas illustrated herein should mainly be seen as examples for illustrating what is meant by the different sections and areas of the tube 112, and may not be representative of an actual tube 112 of packaging material.

As illustrated herein, the tube 112, when flattened, can be divided (in the transversal direction, TD, of the tube) into a first transversal edge section 404 and a second transversal edge section 408. Between the first and second transversal edge section 404, 408, there is a longitudinal sealing, LS, section 406. These sections may extend along the tube 112 in the longitudinal direction. The first and second transversal edge sections 404, 408 may be seen are regions of the tube 112 being two layer thick, i.e. a 2-layer region of the tube 112.

The LS section 406 may be defined as the section where the thickness of the tube 112 is affected by the LS. The LS section 406 may in other words be seen as a 3-layer region of the tube 112. In a subsection of the LS section 406, herein referred to as the LS area 400, the tube 112 of packaging material when pressed together is three layers thick, due to how the packaging material is folded to form the LS. The LS section 406 further extends over a LS strip 414, which can be defined by an LS strip area 416. The LS strip is applied during the forming of the LS in order to provide a seal on the inside of the tube 112. The presence of the LS strip and the folding of the packaging material also affects the thickness of the tube in the LS strip area 416, which also has to be considered when forming the TS.

In the longitudinal direction, LD, (perpendicular to the TD) a transversal sealing section 200 can be defined as an area where the TS is to be formed. The TS section 200 may, as illustrated herein, define a section on either side of a cutting line 412 at which the tube 112 will be cut to form two separate packages. It should be noted that the TS formed in the TS section 200 need not to cover the entire TS section 200. The TS section 200 should rather be understood as a section which is involved during the forming of the TS, e.g. in the sense that it may come into contact with the ultrasonic generating device 304 and/or the anvil 500, 500' during the process of forming the transversal sealing.

At a cross section between the TS section 200 and the LS section 406, a TS-LS cross 410 (or TS-LS overlap area) is formed, herein illustrated by diagonal lines.

Fig. 4A and 4B further shows a first through fourth longitudinal crease line 202a-d provided along the tube 112 in the first and second transversal edge sections 404, 406. As illustrated in Fig. 4B, the crease lines on opposite sides of the tube 112, i.e. the first and third crease line 202a, 202c, and the second and fourth crease line 202b, 202d, are aligned with each other in the transversal direction. However, in practice, the position of the crease lines 202a-d may vary to some extent due to variations in the packaging machine.

It should be further appreciated that even though the tube 112 at the first and second edge 204a, 204b are herein illustrated as having the same thickness as the rest of the first and second transversal edge section 404, 408, the tube 112 may in a region around the first and second edge 204a, 204b have a greater thickness due to the U-shaped folding of the packaging material and the rigidity of the packaging material.

Figure 5A illustrates, by way of a first example, an anvil 500 in a perspective view. A longitudinal direction, LD, and a transversal direction, TD, are illustrated herein for serving as a point of reference. The LD and TD correspond to the same longitudinal and transversal directions as described above. Thus, the TD refers to the direction along which the transversal sealing is to be formed, or in other words, a transversal direction of the tube when it is sealed together (may also be referred to as welded together). Correspondingly, the LD refers to a direction along which the longitudinal sealing is formed, or in other words, a longitudinal direction of the tube.

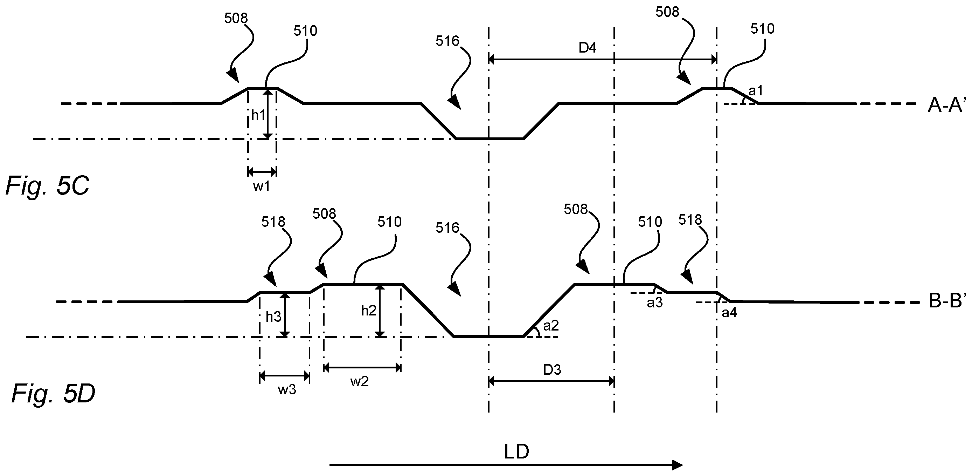

Fig. 5B illustrates a section of the anvil 500 in a front view, i.e. facing the surface which is arranged to engage with the packaging material and ultrasonic generating device during the forming of the transversal sealing. Fig. 5C and 5D illustrates two different cross sections of the anvil 500 (along the lines A-A' and B-B') for illustrating the profile of the anvil 500.

It should be appreciated that the anvil 500 illustrated herein is configured to form a transversal sealing on two opposite sides of a cutting line, separating two consecutive packages. The anvil 500 thus has two similar portions on opposite sides of a recess 516 for holing a cutting knife. Thus, the two portions are configured to form a transversal sealing in a respective package of two consecutive packages. The anvil 500 may thus be symmetrical around a center line, herein represented by the dash-dot line at the center of the recess 516. Thus, when stating e.g. that the anvil 500 comprises a ridge 508, it should also be understood that the anvil may comprise a further ridge 508, on the opposite side of the center line, as is illustrated herein. However, as is readily understood, the anvil 500 may alternatively be configured to form only one transversal sealing, i.e. the two portions of the anvil 500 may be separate elements. Thus, the anvil 500 may comprise only one ridge. In the following, the anvil 500 will mainly be described with reference to one of the portions, but the same features and aspects hold also for the other portion.

With reference to Fig. 5A and 5B the anvil comprises a ridge 508. The ridge 508 extends along the transversal direction of the anvil 500. The ridge 508 should be construed as an elongated protrusion on the anvil 500. The protrusion serving the purpose of providing a localized area with higher pressure during the forming of the transversal sealing. This has the purpose of concentrating the pressure and the ultrasonic heat generation at a region around the ridge 508. As illustrated in the present figures, the ridge 508 may be divided into a mid-section 504, and a first and second peripheral section 502, 506 arranged on either side of the mid-section 504. The mid-section 504 is arranged to face at least a portion of the longitudinal sealing section 406 of the tube 112 (as illustrated in Fig. 4A and 4B) during the transversal sealing state. Thus, a transversal length of the mid-section 504 may be set based on the dimensions of the tube of packaging material to be sealed. The first and second peripheral section 502, 506 are arranged to face at least a portion of the first and second transversal edge section 404, 408 of the tube 112 respectively. The mid-section 504 of the ridge is typically designed in a way so as to handle the difference in number of packaging material layers present in the longitudinal sealing section of the tube 112 compared to on the first and second transversal edge section 404, 408. For example, the ridge 508 may have less of a protrusion (i.e. a lower height of the ridge 508) in the mid-section 504 compared to the first and second peripheral section 502, 506 to compensate for the extra layer of packaging material. In another example, and as illustrated herein, the ridge 508 may comprise a plurality of teeth 514 arranged side-by-side in the transversal direction.

The first and second peripheral section 502, 506 comprises a respective first sub-portion 502b, 506b, abutting the mid-section 504, and a respective second sub-portion 502d, 506d, abutting the first sub-portion 502b, 506b. The first sub-portion 502b, 506b, of the ridge 508 is offset in the longitudinal direction of the anvil 500 by a first distance, denoted D1 in Fig. 5b. The second sub-portion 502d, 506d, of the ridge 508 is offset in the longitudinal direction of the anvil 500 by a second distance, denoted D2 in Fig. 5b. The first distance D1 is different than the second distance D2. The difference between the first distance D1 and the second distance D2 may be between 0.1 mm and 3mm. Thus, the first and second peripheral section 502, 506 respectively comprises two sub-portions being offset from each other in the longitudinal direction. The second distance D2 is smaller than the first distance D1. This may be advantageous in that the mid-section 504, the first sub-portion 502b, 506b, and the second sub-portion 502d, 506d can be separated from each other in the longitudinal direction, while the ridge 508 as a whole (and thus the width of the transversal sealing) in the longitudinal direction can be kept small. In the present example, the first sub-portion 502b, 506b is offset from the mid-section 504 away from the center of the anvil 500. However, in some embodiments, the first-sub-portion 502b, 506b may be offset from the mid-section 504 towards the center of the anvil 500.

In the illustrated example, the first distance D1 and the second distance D2 are both larger than zero. However, in some embodiments, the second distance D2 may be zero. Put differently, the first sub-portion 502b, 506b may be offset from the second sub-portion 502d, 506d, while the second sub-portion 502d, 506d has the same position in the longitudinal direction as the mid-section 504.

The offsets as described herein are defined from a center (in the LD) of the ridge 508 in the different sections, or more specifically, from a center of a crest 510 of the ridge 508 in the different sections. Even though the offsets are defined with the mid-section 514 of the ridge 508 as a point of reference, any suitable point of reference of the anvil 500 may be used. For example, the offset of the different sections may be defined with the center of the anvil 500 as the point of reference. In such case, the first sub-portion 502b, 506b of the ridge 508 is offset by a third distance denoted D3, and the second sub-portion 502d, 506d is offset by a fourth distance denoted D4. The mid-section 504 of the ridge 508 is then itself offset by a fifth distance, denoted D5, from the center. It should be appreciated that the first and second peripheral section 502, 506 may be divided into further sub-portions than the first and second sub-portion 502b, 506b, 502d, 506d, having different offset, to account for further characteristics of the tube.

In the illustrated example, the first and second peripheral section 502, 506 further comprises a respective first transition section 502a, 506a. The transition section 502a, 506a are arranged at an end of the respective first and second peripheral section 502, 506 abutting the mid-section 504. In other words, the first transition section 502a, 506a provides a transition from the mid-section 504 of the ridge 508 to the first sub-portion 502b, 506b of the ridge 508. A combined transversal length of the first transition section 502a, 506a (i.e. a width in the transversal direction of the brackets indicating the first transition section 502a, 506a) of the first and second peripheral section 502, 506 may be greater than a transversal length of the mid-section 504.

A transversal length of the first and second sub-portion, 502b, 506b, 502d, 506d (or put differently, a ratio between the first and second sub-portion, 502b, 506b, 502d, 506d over the transversal length of the first and second peripheral section 502, 506 respectively) may be set such the respective first sub-portion 502b, 506b is arranged to compensate for longitudinal crease lines 202a-d of the tube 112 during a transversal sealing state. Further, they may be set such that the respective second sub-portion 502d, 506d is arranged to compensate for an edge of the tube 112, during the transversal sealing state.. In other words, the transition between the first and second sub-portion, 502b, 502d in the first peripheral section 502 may be set based on an expected position of the first and third longitudinal crease line 202a, 202c as illustrated in Fig. 4B such that the crease lines 202a, 202c engages with the first sub-portion 502b of the ridge 502, and the first edge 204a of the tube 112 engages with the second sub-portion 502d of the ridge 508. Correspondingly, the transition between the first and second sub-portion, 506b, 506d in the second peripheral section 506 may be set based on an expected position of the second and fourth longitudinal crease line 202b, 202d such that the crease lines 202b, 202d engages with the first sub-portion 506b, and the second edge 204b of the tube 112 engages with the second sub-portion 506d of the ridge 508. Due to fluctuations in the tube 112, the position of the crease lines 202a-d may not be exact. A gradual transition between the first and second sub- portion, 502b, 506b, 502d may mitigate this variation in position. The first and second peripheral section 502, 506 may thus further comprise a respective second transition section 502c, 506c arranged between the respective first sub-portion 502b, 506b and the respective second sub-portion 502d, 506d. The respective transversal length of the first transition section 502a, 506b may be greater than a respective transversal length of the second transition section 502c, 506c. Thus, a smoother transition may be achieved between the mid-section 504 and the first sub-portion 502b, 506b, than the transition between the first sub-portion 502b, 506b and the second sub-portion 502d, 506d. The relatively sharper transition of the second transition section 502c, 506c can be achieved due to the crease lines 202a-d having a relatively short extension in the transversal direction. Thus, a more precise pressure distribution may be provided for around this region.

Further, the transversal length of the first and second sub-portion, 502b, 506b, 502d, 506d may be set based on a structural property of the packaging material of the tube. The structural property may for instance be a rigidity of the packaging material, a thickness of the packaging material, a number of layers of material, a material type (e.g parameters relating to heat capacity of the material, viscosity of the material, mechanical strength of the material, etc.), how it was manufactured, etc.. In case of a multilayered carton-based packaging material is used, the structural properties may also include structural properties of the individual layers, such as the thickness, type of material, etc. Further, the structural properties may also include properties of the crease lines, such as width, compression degree, etc. The anvil 500 may comprise an anvil ID tag 512. The anvil ID tag 512 allows for identification of the anvil 500, and linking it with a certain packaging material e.g. through its structural properties.

Turning now to Fig. 5C and 5D, two cross sections along the lines A-A' and B-B' are shown. More specifically, a profile of the surface of the anvil 500 arranged to face the ultrasonic generating device during the transversal sealing state is shown. Fig. 5C thus illustrates the profile in the first sub-portion 502b, 506b of the ridge 508, and Fig. 5D illustrates the profile in the second sub-portion 502d, 506d of the ridge 508. The distance denoted by D4 shows the offset between the center of the anvil 500 and the first sub-portion 502b, 506b of the ridge 508, and is the same as the distance D4 in Fig. 5B. Similarly, the distance denoted D3 shows the distance between the center of the anvil 500 and the second sub-portion 502d, 506d of the ridge 508, the same as in Fig. 5B.

The anvil 500 according to the present inventive concept may have additional parameters of the ridge 508 vary across the first and second peripheral section 502, 506. For instance, at least one of a height, a width (i.e. in the longitudinal direction), and a slope angle of the second sub-portion 502d, 506d of the ridge 508 may be different from a height, a width, and a slope angle of the first sub-portion 502b, 506b of the ridge 508. In the present example, the first sub-portion 502b, 506b of the ridge 508 has a height h1, a width w1 and a slope angle a1. The second sub-portion 502d, 506d of the ridge 508 has a height h2 and a width w2. The second sub-portion 502d, 506d further has a slope angle a2 at a first side, and a stepwise slope with slope angles a3 and a4 at a second side. The stepwise slope forms a support surface 518 which may further improve a sealing performance of the anvil 500. The support surface 518 herein has a height h3 and a width w3. The heights of the ridge 508 are herein illustrated with reference to a common reference point. It should be appreciated that the height of the ridge 508 may be defined from any suitable point of the anvil.

The illustrated sizes of the heights, widths and angles should merely be seen as relative sizes for the present example, but not limiting for the scope of the inventive concept. For example, as apparent from Fig. 5C and 5D, the width of the first sub-portion 502b, 506b of the ridge 508 is in the present example smaller than the width w2 of the second sub-portion 502d, 506d. It should be appreciated that the numerical values of the measurements may vary from what is illustrated herein. For instance, the exact measurements of the anvil 500 depends on what packaging material is used, and what dimension the package to be produced has.

As further illustrated in Fig. 5A and 5B, the height of the first sub-portion 502b, 506b of the ridge 508 is in the present example equal to the height h2 of the second sub-portion 502d, 506d. Thus, the ridge 508 may have a constant height over the first and second peripheral section 502, 506. Alternatively, the height of the ridge 508 may vary over the first and second peripheral section 502, 506.

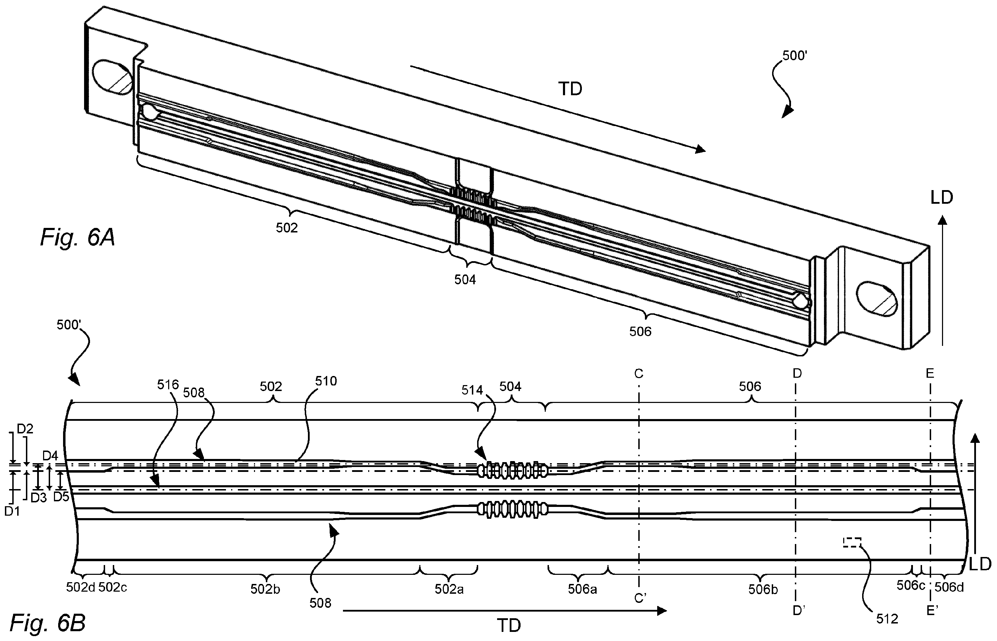

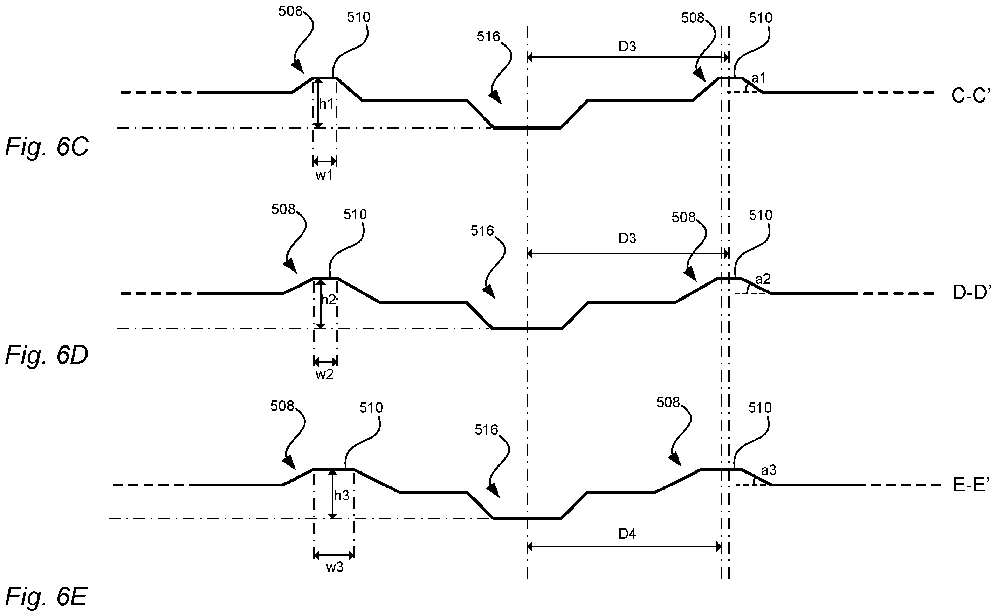

Figure 6A illustrates, by way of a second example, an anvil 500' in a perspective view. Fig. 5B illustrates a section of the anvil 500' in a front view, i.e. facing the surface which is arranged to engage with the packaging material and ultrasonic generating device during the forming of the transversal sealing. Fig. 5C to 5E illustrates three different cross sections of the anvil 500' for illustrating the profile of the anvil 500'.

The same features and principles of the anvil 500 as described above in connection with Fig. 5A to 5D are applicable to the anvil 500' as described in the following as well, unless other specified. In particular, the anvil 500' differs from that of Fig. 5A to 5D in the shape and position of the first and second peripheral section 502, 506 of the ridge 508.

As one example, the second transition section 502c, 506c of the anvil 500' are arranged at a farther distance from the mid-section 504 compared to the anvil 500 of Fig. 5A to 5D. In addition the first sub-portion 502b, 506b of the ridge has a varying slope angle along its extension, as is more clearly illustrated in Fig. 6C to 6E.

Looking first at Fig. 6C, a profile of the anvil 500' in the cross section along line C-C' is shown. The line C-C' is positioned at an inner position of the first sub-portion 502b, 506b. The ridge 508 herein has a width w1, a height h1, and a slope angle a1. Further, the ridge 508 has an offset denoted D3 from a center of the anvil 500'. It should be noted that even though the labels used for denoting the width, height, slope angle, and offset, are the same as in Fig. 5A to 5D, their numerical values may be different. Looking at Fig. 6D, a profile of the anvil 500' in the cross section along line D-D' is shown. The line D-D' is positioned at an outer position of the first sub-portion 502b, 506b. The ridge 508 herein has a width w2, a height h2, and a slope angle a2. Further, the ridge 508 has a same offset denoted D3 from a center of the anvil 500', as in Fig. 6C. In the illustrated example, the width w2 and the height h2 is equal to the width w1 and the height h1 of the ridge in Fig. 6C. However, the slope angle a2 is different from the slope angle a1 of the ridge 508 in Fig. 6C. In particular, the slope angle a2 is smaller than the slope angle a1. In this example, the slope angle a2 is used in a region of the ridge 508 that will come in contact with the longitudinal crease lines and/or an edge of the tube during the transversal sealing state. This example is to be seen as a non-limiting example of having a ridge parameter vary within a sub-portion of the ridge 508. In another example, e.g. the width or height of the ridge 508 may vary. All of these parameters may affect the pressure (and thus also the heat generation) and polymer flow during the transversal sealing. These parameters can thus be used as design parameters to allow different heat generation and different polymer flow

Lastly, Fig. 6C shows a profile of the anvil 500' in the cross section along line E-E'. The line E-E' is positioned at a position in the second sub-portion 502d, 506d. The ridge 508 herein has a width w3, a height h3, and a slope angle a3. The width w3 is larger than the width w1 and w2 of the two previous cross sections. Further, the center of the ridge 508 has a different offset, denoted D4, from the center of the anvil 500'. The offset D4 of the second sub-portion 502d, 506d of the ridge 508 is, as in the example of Fig. 5A to 5D, smaller than the offset D3 of the first sub-portion 502b, 506b of the ridge 508.

Figure 7 is a flow chart illustrating the steps of a method 700 for transversally sealing a tube 112 of packaging material using the ultrasonic sealing system 300 as described above. The method 700 is performed in a packaging machine 100, for instance by the control unit 126 of the packaging machine 100. The method 700 may be seen as a method for operating the ultrasonic sealing system 300. The packaging material comprises a paperboard layer and a plastic foil attached to the paperboard layer. In the following, the different steps are described in more detail with reference to Fig. 7. Even though illustrated in a specific order, the steps of the method 700 may be performed in any suitable order, in parallel, as well as multiple times. For example, steps S708 to S716, as will be further discussed below, may be performed before, during or after the steps S702 to S706.

The method 700 comprises providing S02 a transversal sealing section 200 of the tube 112 of packaging material between the ultrasonic generating device 304 and the anvil 500, 500' of the ultrasonic sealing system 300.

The method 700 further comprises generating S704, by the ultrasonic generating device 304 of the ultrasonic sealing system 300, ultrasonic vibrations, such that the plastic foil of the packaging material in the transversal sealing section 200 at least partly melts.

The method 700 further comprises pressing S706 together the tube 112 in the transversal sealing section 200 between the ultrasonic generating device 304 and the anvil 500,500', such that a pressure is formed over the transversal sealing section 200 causing the plastic foil to bond, thereby forming a transversal sealing.

It should be noted that the steps of generating S704 the ultrasonic vibrations and pressing S706 together the tube in the transversal sealing section may be performed simultaneously.

The method 700 may further comprise reading S708 a PM reel identification, ID, tag 120 on a PM reel 102 in the packaging machine 100 by using a PM reel ID reader 122.

The method 700 may further comprise reading S710 an anvil ID tag 512 of the anvil 500, 500' by using an anvil ID reader 124.

The method 700 may further comprise comparing S712 anvil ID data extracted from the anvil ID tag 512 and PM reel ID data extracted from the PM reel ID tag 120 in a control unit 126.

The method 700 may further comprise, in case of mismatch between the anvil ID data and the PM reel ID data, transmitting S714 a notification of mismatching anvil and PM. The notification signal may e.g. be transmitted to a control system of the packaging machine 100, or to a machine operator.

The method 700 may further comprise, in case of a non-match between the anvil ID data and the PM ID data, halting S716 production of the packages.

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that perform the steps, services and functions of the method disclosed herein when executed by the one or more processors in some embodiments.

Additionally, variations to the disclosed variants can be understood and effected by the skilled person in practicing the claimed invention, from a study of the drawings, the disclosure, and the appended claims.

## Claims

1. An anvil (500, 500') of an ultrasonic sealing system (300) for transversally sealing a tube (112) of packaging material, said anvil (500, 500') comprising a ridge (508) extending along a transversal direction (TD) of the anvil (500, 500'), wherein the ridge (508) comprises:
a mid-section (504), and
a first and a second peripheral section (502, 506), arranged on either side of the mid-section (504), wherein the first and second peripheral section (502, 506) comprises a respective first sub-portion (502b, 506b) and a respective second sub-portion (502d, 506d), wherein the respective first sub-portion (502b, 506b) is placed between the mid-section (504) and the respective second sub-portion (502d, 506d),
wherein the first sub-portion (502b, 506b) of the ridge is offset in a longitudinal direction (LD) of the anvil (500, 500') by a first distance (D1), from the mid-section (504),
wherein the second sub-portion (506b, 506d) of the ridge is offset in the longitudinal direction (LD) of the anvil (500, 500') by a second distance (D2) from the mid-section (504), and
wherein the first distance (D1) is different from the second distance D2, **characterized in that** the second distance (D2) is smaller than the first distance (D1).

2. The anvil (500, 500') according to claim 1, wherein the first and second peripheral section (502, 506) further comprises a respective first transition section (502a, 506a) abutting the mid-section (504),
wherein a combined transversal length of the first transition section (502a, 506a) of the first and second peripheral section (502, 506) is greater than a transversal length of the mid-section (504).

3. The anvil (500, 500') according to claim 1 or 2, wherein the ridge (508) has a width w1, a height h1, and a slope angle a1 at an inner position of the first sub-portion (502b, 506b), wherein the ridge (508) has a width w2, a height h2, and a slope angle a2 at an outer position of the first sub-portion (502b, 506b), wherein the width w2 and the height h2 is equal to the width w1 and the height h1.

4. The anvil (500, 500') according to any of the claims 1 to 3, wherein the second distance (D2) is zero.

5. The anvil (500, 500') according to any of the claims 1 to 4, wherein at least one of a height, a width, and a slope angle of the second sub-portion (502d, 506d) of the ridge (508) is different from a height, a width, and a slope angle the first sub-portion (502b, 506b) of the ridge (508).

6. The anvil (500, 500') according to any of the claims 1 to 5, wherein the first and second peripheral section (502, 506) of the ridge (508) have a constant height.

7. An ultrasonic sealing system (300) for transversally sealing a tube (112) of packaging material, the ultrasonic sealing system (300) comprises:
an ultrasonic generating device (304) arranged to transmit ultrasonic vibrations into the tube (112), and
an anvil (500, 500') according to any of the claims 1 to 6, arranged opposite to the ultrasonic generating device (304), such that during a transversal sealing state, the tube (112) is arranged between the ultrasonic generating device (304) and the anvil (500, 500').

8. The ultrasonic sealing system (300) according to claim 7, wherein a first through fourth longitudinal crease line (202a-d) is provided along the tube (112) in the first and second transversal edge sections (404, 406), wherein the tube (112) comprises a first and second edge (204a, 204b), wherein:
- the transition between the first and second sub-portion (502b, 502d) in the first peripheral section (502) is set based on an expected position of the first and third longitudinal crease line (202a, 202c) such that the crease lines (202a, 202c) engage with the first sub-portion (502b) of the ridge (502), and the first edge (204a) of the tube (112) engages with the second sub-portion (502d) of the ridge (508), and
- the transition between the first and second sub-portion (506b, 506d) in the second peripheral section (506) is set based on an expected position of the second and fourth longitudinal crease line (202b, 202d) such that the crease lines (202b, 202d) engage with the first sub-portion (506b), and the second edge (204b) of the tube (112) engages with the second sub-portion (506d) of the ridge (508).

9. The ultrasonic sealing system (300) according to any of the claims 7 or 8, wherein the first and second peripheral section (502, 506) further comprises a respective second transition section (502c, 506c) arranged between the respective first sub-portion (502b, 506b) and the respective second sub-portion (502d, 506d) of the first and second peripheral section (502, 506),
wherein a respective transversal length of the first transition section (502a, 506a) is greater than a respective transversal length of the second transition section (502c, 506c).

10. A packaging machine (100) comprising a transversal sealing (TS) station (114) for transversally seal and cut a tube of packaging material (112) into packages (116), wherein the TS station (114) comprises an ultrasonic sealing system (300) according to any of the claims claim 7 to 9.

11. The packaging machine (100) according to any of the claims 10, wherein the packaging machine (100) further comprises a packaging material (PM) reel receiver (118) arranged to receive a PM reel (102), wherein the PM reel (102) holds a web (104) of PM, wherein the PM reel receiver (118) is equipped with a PM reel ID reader (122) arranged to read a PM reel identification (ID) tag (120) on the PM reel (102), and
wherein the TS sealing station (114) comprises an anvil ID reader (124) arranged to read an anvil ID tag (512) of the anvil (500, 500'), and
wherein the packaging machine (100) further comprises a control unit (126) comprising a processor (128) and a memory (130) configured to receive PM reel ID data extracted from the PM reel ID tag (120), to receive anvil ID data extracted from the anvil ID tag (512) and to compare the PM reel ID data with the anvil ID data to assure that the anvil (500, 500') is matching the packaging material provided via the PM reel (102).

12. A method (700) performed in a packaging machine (100) for transversally sealing a tube (112) of packaging material using an ultrasonic sealing system (300) according to any of the claims 7 to 9, wherein the packaging material comprises a paperboard layer and a plastic foil attached to the paperboard layer, the method (700) comprising:
providing (S702) a transversal sealing section of the tube (112) of packaging material between the ultrasonic generating device (304) and the anvil (500, 500') of the ultrasonic sealing system (300),
generating (S704), by the ultrasonic generating device (304) of the ultrasonic sealing system (300), ultrasonic vibrations such that the plastic foil of the packaging material in the transversal sealing section at least partly melts, and
pressing (S706) together the tube (112) in the transversal sealing section between the ultrasonic generating device (304) and the anvil (500, 500'), such that a pressure is formed over the transversal sealing section (302) causing the plastic foil to bond, thereby forming a transversal sealing.

13. The method (700) according to claim 12, further comprising
reading (S708) a PM reel identification (ID) tag (120) on a PM reel (102) in the packaging machine (100) by using a PM reel ID reader (122),
reading (S710) an anvil ID tag (512) of the anvil (500, 500') by using an anvil ID reader (124),
comparing (S712) anvil ID data extracted from the anvil ID tag (512) and PM reel ID data extracted from the PM reel ID tag (120) in a control unit (126),
in case of mismatch between the anvil ID data and the PM reel ID data, transmitting (S714) a notification of mismatching anvil and PM.

14. A computer program product comprising instructions, which when the program is executed by a computer, cause the computer and the packaging machine according to any of the claims 10 to 11 to carry out the steps of the method (700) of claims 12 or 13.

## Patentansprüche

1. Ein Amboss (500, 500') eines Ultraschall-Versiegelungssystems (300) zum Querversiegeln eines Schlauchs (112) aus Verpackungsmaterial, wobei der Amboss (500, 500') eine sich entlang einer Querrichtung (TD) des Ambosses (500, 500') erstreckende Rippe (508) umfasst, wobei die Rippe (508) umfasst:
einen Mittelabschnitt (504) und
einen ersten und einen zweiten Randabschnitt (502, 506), die zu beiden Seiten des Mittelabschnitts (504) angeordnet sind, wobei der erste und der zweite Randabschnitt (502, 506) jeweils einen ersten Teilabschnitt (502b, 506b) und einen zweiten Teilabschnitt (502d, 506d) umfassen, wobei der jeweilige erste Teilabschnitt (502b, 506b) zwischen dem Mittelabschnitt (504) und dem jeweiligen zweiten Teilabschnitt (502d, 506d) angeordnet ist,
wobei der erste Teilabschnitt (502b, 506b) der Rippe in einer Längsrichtung (LD) des Ambosses (500, 500') um einen ersten Abstand (D1) vom Mittelabschnitt (504) versetzt ist,
wobei der zweite Teilabschnitt (506b, 506d) der Rippe in Längsrichtung (LD) des Ambosses (500, 500') um einen zweiten Abstand (D2) vom Mittelabschnitt (504) versetzt ist, und
wobei der erste Abstand (D1) sich vom zweiten Abstand (D2) unterscheidet, **dadurch gekennzeichnet, dass** der zweite Abstand (D2) kleiner ist als der erste Abstand (D1).

2. Der Amboss (500, 500') nach Anspruch 1, wobei der erste und der zweite Umfangsabschnitt (502, 506) ferner jeweils einen ersten Übergangsabschnitt (502a, 506a) aufweisen, der an den Mittelabschnitt (504) angrenzt,
wobei eine kombinierte Querlänge des ersten Übergangsabschnitts (502a, 506a) des ersten und des zweiten Randabschnitts (502, 506) größer ist als eine Querlänge des Mittelabschnitts (504).

3. Der Amboss (500, 500') nach Anspruch 1 oder 2, wobei die Rippe (508) an einer inneren Position des ersten Teilabschnitts (502b, 506b) aufweist, wobei die Rippe (508) an einer äußeren Position des ersten Teilabschnitts (502b, 506b) eine Breite w2, eine Höhe h2 und einen Neigungswinkel a2 aufweist, wobei die Breite w2 und die Höhe h2 gleich der Breite w1 und der Höhe h1 sind.

4. Der Amboss (500, 500') gemäß einem der Ansprüche 1 bis 3, wobei der zweite Abstand (D2) null ist.

5. Der Amboss (500, 500') gemäß einem der Ansprüche 1 bis 4, wobei mindestens einer der Werte für Höhe, Breite und Neigungswinkel des zweiten Teilabschnitts (502d, 506d) der Rippe (508) von einer Höhe, einer Breite und einem Neigungswinkel des ersten Teilabschnitts (502b, 506b) der Rippe (508) abweicht.

6. Der Amboss (500, 500') gemäß einem der Ansprüche 1 bis 5, wobei der erste und der zweite Umfangsabschnitt (502, 506) der Rippe (508) eine konstante Höhe aufweisen.

7. Ultraschall-Siegelvorrichtung (300) zum Quersiegeln eines Schlauchs (112) aus Verpackungsmaterial, wobei die Ultraschall-Siegelvorrichtung (300) umfasst:
eine Ultraschallerzeugungsvorrichtung (304), die so angeordnet ist, dass sie Ultraschallschwingungen in den Schlauch (112) überträgt, und
einen Amboss (500, 500') gemäß einem der Ansprüche 1 bis 6, der der Ultraschallerzeugungsvorrichtung (304) gegenüberliegend angeordnet ist, so dass während eines Querversiegelungszustands der Schlauch (112) zwischen der Ultraschallerzeugungsvorrichtung (304) und dem Amboss (500, 500') angeordnet ist.

8. Das Ultraschall- Siegelvorrichtung (300) nach Anspruch 7, wobei eine erste bis vierte Längsfaltlinie (202a-d) entlang des Schlauchs (112) in den ersten und zweiten Querrandabschnitten (404, 406) vorgesehen ist, wobei der Schlauch (112) einen ersten und zweiten Rand (204a, 204b) umfasst, wobei:
- Der Übergang zwischen dem ersten und dem zweiten Teilabschnitt (502b, 502d) im ersten Umfangsabschnitt (502) wird auf der Grundlage einer erwarteten Position der ersten und dritten Längsfaltlinie (202a, 202c) so festgelegt, dass die Faltlinien (202a, 202c) mit dem ersten Teilabschnitt (502b) der Rippe (502) in Eingriff kommen, und die erste Kante (204a) des Schlauchs (112) in den zweiten Teilabschnitt (502d) der Rippe (508) eingreift, und
- der Übergang zwischen dem ersten und dem zweiten Teilabschnitt (506b, 506d) im zweiten Umfangsabschnitt (506) auf der Grundlage einer erwarteten Position der zweiten und vierten Längsfalzlinie (202b, 202d) so festgelegt ist, dass die Falzlinien (202b, 202d) mit dem ersten Teilabschnitt (506b) in Eingriff kommen, und die zweite Kante (204b) des Schlauchs (112) in den zweiten Teilabschnitt (506d) der Rippe (508) eingreift.

9. Das Ultraschall- Siegelvorrichtung (300) nach einem der Ansprüche 7 oder 8, wobei der erste und der zweite Umfangsabschnitt (502, 506) ferner jeweils einen zweiten Übergangsabschnitt (502c, 506c) aufweisen, der zwischen dem jeweiligen ersten en Teilabschnitt (502b, 506b) und dem jeweiligen zweiten Teilabschnitt (502d, 506d) des ersten und zweiten Umfangsabschnitts (502, 506) angeordnet ist,
wobei eine jeweilige Querlänge des ersten Übergangsabschnitts (502a, 506a) größer ist als eine jeweilige Querlänge des zweiten Übergangsabschnitts (502c, 506c).

10. Verpackungsmaschine (100) mit einer Quersiegelstation (TS) (114) zum Quersiegeln und Schneiden einer Rolle aus Verpackungsmaterial (112) in Verpackungen (116), wobei die TS-Station (114) ein Ultraschall- Siegelvorrichtung (300) gemäß einem der Ansprüche 7 bis 9 umfasst.

11. Die Verpackungsmaschine (100) gemäß einem der Ansprüche 10, wobei die Verpackungsmaschine (100) ferner einen Verpackungsmaterial (PM)-Rollenempfänger (118) umfasst, der zur Aufnahme einer PM-Rolle (102) angeordnet ist, wobei die PM-Rolle (102) eine Bahn (104) aus PM hält, wobei der PM-Rollen-Aufnehmer (118) mit einem PM-Rollen-ID-Lesegerät (122) ausgestattet ist, das zum Lesen eines PM-Rollen-Identifikations- (ID-) Etiketts (120) auf der PM-Rolle (102) ausgelegt ist, und
wobei die TS-Siegelstation (114) einen Amboss-ID-Leser (124) umfasst, der zum Lesen eines Amboss-ID-Tags (512) des Ambosses (500, 500') ausgelegt ist, und
wobei die Verpackungsmaschine (100) ferner eine Steuereinheit (126) umfasst, die einen Prozessor (128) und einen Speicher (130) umfasst, der so konfiguriert ist, dass er PM-Rollen-ID-Daten empfängt, die aus dem PM-Rollen-ID-Tag (120) extrahiert wurden, dass er Amboss-ID-Daten empfängt, die aus dem Amboss-ID-Tag (512) zu empfangen und die PM-Rollen-ID-Daten mit den Amboss-ID-Daten zu vergleichen, um sicherzustellen, dass der Amboss (500, 500') mit dem über die PM-Rolle (102) bereitgestellten Verpackungsmaterial übereinstimmt.

12. Verfahren (700), das in einer Verpackungsmaschine (100) zum Querverschweißen einer Schlauch (112) aus Verpackungsmaterial unter Verwendung eines Ultraschall- Siegelvorrichtungs (300) gemäß einem der Ansprüche 7 bis 9 durchgeführt wird, wobei das Verpackungsmaterial eine Kartonschicht und eine an der Kartonschicht befestigte Kunststofffolie umfasst, wobei das Verfahren (700) umfasst:
Bereitstellen (S702) eines Quersiegelabschnitts des Schlauchs (112) aus Verpackungsmaterial zwischen der Ultraschallerzeugungsvorrichtung (304) und dem Amboss (500, 500') des Ultraschallsiegelungssystems (300),
Erzeugen (S704) von Ultraschallschwingungen durch die Ultraschallerzeugungsvorrichtung (304) des Ultraschall-Siegelungssystems (300), so dass die Kunststofffolie des Verpackungsmaterials im Quer-Siegelabschnitt zumindest teilweise schmilzt, und
Zusammenpressen (S706) des Schlauchs (112) im Quersiegelabschnitt zwischen der Ultraschallerzeugungsvorrichtung (304) und dem Amboss (500, 500'), so dass über dem Quersiegelabschnitt (302) ein Druck entsteht, der bewirkt, dass die Kunststofffolie miteinander verbunden wird, wodurch eine Quersiegelung gebildet wird.

13. Verfahren (700) nach Anspruch 12, ferner umfassend
das Lesen (S708) eines PM-Rollen-Identifikations-Tags (ID-Tags) (120) auf einer PM-Rolle (102) in der Verpackungsmaschine (100) unter Verwendung eines PM-Rollen-ID-Lesegeräts (122),
Lesen (S710) eines ID-Tags (512) des Ambosses (500, 500') unter Verwendung eines Amboss-ID-Lesegeräts (124),
Vergleichen (S712) von aus dem Amboss-ID-Tag (512) extrahierten Amboss-ID-Daten und aus dem PM-Rollen-ID-Tag (120) extrahierten PM-Rollen-ID-Daten in einer Steuereinheit (126),
im Falle einer Nichtübereinstimmung zwischen den Amboss-ID-Daten und den PM-Rollen-ID-Daten, Senden (S714) einer Benachrichtigung über die Nichtübereinstimmung von Amboss und PM.

14. Ein Computerprogrammprodukt, das Anweisungen umfasst, die, wenn das Programm von einem Computer ausgeführt wird, bewirken, dass der Computer und die Verpackungsmaschine gemäß einem der Ansprüche 10 bis 11 die Schritte des Verfahrens (700) der Ansprüche 12 oder 13 ausführen.

## Revendications

1. Enclume (500, 500') d'un système de scellage par ultrasons (300) destinée à sceller transversalement un tube (112) en matériau d'emballage, ladite enclume (500, 500') comprenant une nervure (508) s'étendant dans une direction transversale (TD) de l'enclume (500, 500'), dans lequel la nervure (508) comprend :
une section médiane (504), et
une première et une deuxième sections périphériques (502, 506), disposées de part et d'autre de la section médiane (504), dans lequel la première et la deuxième sections périphériques (502, 506) comprennent respectivement une première sous-partie (502b, 506b) et une deuxième sous-partie (502d, 506d), dans laquelle la première sous-partie respective (502b, 506b) est placée entre la section médiane (504) et la deuxième sous-partie respective (502d, 506d),
dans laquelle la première sous-partie (502b, 506b) de la nervure est décalée dans une direction longitudinale (LD) de l'enclume (500, 500') d'une première distance (D1) par rapport à la section médiane (504),
dans lequel la deuxième sous-partie (506b, 506d) de la nervure est décalée dans la direction longitudinale (LD) de l'enclume (500, 500') d'une deuxième distance (D2) par rapport à la section médiane (504), et
dans lequel la première distance (D1) est différente de la deuxième distance (D2), **caractérisé en ce que** la deuxième distance (D2) est inférieure à la première distance (D1).

2. Enclume (500, 500') selon la revendication 1, dans laquelle les première et deuxième sections périphériques (502, 506) comprennent en outre une première section de transition respective (502a, 506a) venant en butée contre la section médiane (504),
dans lequel une longueur transversale combinée de la première section de transition (502a, 506a) des première et deuxième sections périphériques (502, 506) est supérieure à une longueur transversale de la section médiane (504).

3. L'enclume (500, 500') selon la revendication 1 ou 2, dans laquelle la nervure (508) présente une largeur w1, une hauteur h1 et un angle d'inclinaison a1 en une position intérieure de la première sous-partie (502b, 506b), dans lequel la nervure (508) présente une largeur w2, une hauteur h2 et un angle d'inclinaison a2 à une position extérieure de la première sous-partie (502b, 506b), dans lequel la largeur w2 et la hauteur h2 sont égales à la largeur w1 et à la hauteur h1.

4. Eenclume (500, 500') selon l'une quelconque des revendications 1 à 3, dans laquelle la deuxième distance (D2) est nulle.

5. Enclume (500, 500') selon l'une quelconque des revendications 1 à 4, dans laquelle au moins l'un parmi une hauteur, une largeur et un angle d'inclinaison de la deuxième sous-partie (502d, 506d) de la nervure (508) est différent de la hauteur, de la largeur et de l'angle d'inclinaison de la première sous-partie (502b, 506b) de la nervure (508).

6. L'enclume (500, 500') selon l'une quelconque des revendications 1 à 5, dans laquelle les première et deuxième sections périphériques (502, 506) de la nervure (508) ont une hauteur constante.

7. Système de scellage par ultrasons (300) destiné à sceller transversalement un tube (112) en matériau d'emballage, le système de scellage par ultrasons (300) comprenant :
un dispositif générateur d'ultrasons (304) agencé pour transmettre des vibrations ultrasonores dans le tube (112), et
une enclume (500, 500') selon l'une quelconque des revendications 1 à 6, disposée en face du dispositif générateur d'ultrasons (304), de telle sorte que, pendant un état de scellage transversal, le tube (112) soit disposé entre le dispositif générateur d'ultrasons (304) et l'enclume (500, 500').

8. Système de scellage par ultrasons (300) selon la revendication 7, dans lequel une première à une quatrième ligne de pliage longitudinale (202a-d) est prévue le long du tube (112) dans les première et deuxième sections de bord transversales (404, 406), dans lequel le tube (112) comprend un premier et un deuxième bord (204a, 204b), dans lequel :
- la transition entre la première et la deuxième sous-section (502b, 502d) dans la première section périphérique (502) est définie en fonction d'une position prévue des première et troisième lignes de pliage longitudinales (202a, 202c) de telle sorte que les lignes de pliage (202a, 202c) s'engagent avec la première sous-partie (502b) de la nervure (502), et le premier bord (204a) du tube (112) s'engage avec la deuxième sous-partie (502d) de la nervure (508), et
- la transition entre les première et deuxième sous-parties (506b, 506d) dans la deuxième section périphérique (506) est définie en fonction d'une position prévue des deuxième et quatrième lignes de pliage longitudinales (202b, 202d) de telle sorte que les lignes de pliage (202b, 202d) s'engagent avec la première sous-partie (506b), et le deuxième bord (204b) du tube (112) s'engage avec la deuxième sous-partie (506d) de la nervure (508).

9. Système de scellage par ultrasons (300) selon l'une quelconque des revendications 7 ou 8, dans lequel les première et deuxième sections périphériques (502, 506) comprennent en outre une deuxième section de transition respective (502c, 506c) disposée entre la première sous-partie de transition respective (502b, 506b) et la deuxième sous-partie respective (502d, 506d) des première et deuxième sections périphériques (502, 506),
dans laquelle une longueur transversale respective de la première section de transition (502a, 506a) est supérieure à une longueur transversale respective de la deuxième section de transition (502c, 506c).

10. Machine d'emballage (100) comprenant une station de scellage transversal
(TS)
(114) destinée à sceller et à découper transversalement un tube de matériau d'emballage (112) en emballages (116), dans laquelle la station TS (114) comprend un système de scellage par ultrasons (300) selon l'une quelconque des revendications 7 à 9.

11. La machine d'emballage (100) selon l'une quelconque des revendications 10, dans laquelle la machine d'emballage (100) comprend en outre un récepteur de bobine de matériau d'emballage (PM) (118) agencé pour recevoir une bobine de PM (102), dans laquelle la bobine de PM (102) contient une bande (104) de PM, dans laquelle le récepteur de bobine de PM (118) est équipé d'un lecteur d'identification de bobine de PM (122) agencé pour lire une étiquette d'identification (ID) de bobine de PM (120) sur la bobine de PM (102), et
dans lequel la station de scellage TS (114) comprend un lecteur d'identification d'enclume (124) agencé pour lire une étiquette d'identification d'enclume (512) de l'enclume (500, 500'), et
dans laquelle la machine d'emballage (100) comprend en outre une unité de commande (126) comprenant un processeur (128) et une mémoire (130) configurés pour recevoir des données d'identification de bobine PM extraites de l'étiquette d'identification de bobine PM (120), pour recevoir des données d'identification d'enclume extraites de l'étiquette d'identification d'enclume (512) et à comparer les données d'identification de la bobine de PM avec les données d'identification de l'enclume afin de s'assurer que l'enclume (500, 500') correspond au matériau d'emballage fourni via la bobine de PM (102).

12. Procédé (700) mis en œuvre dans une machine d'emballage (100) pour sceller transversalement un tube (112) en matériau d'emballage à l'aide d'un système de scellage par ultrasons (300) selon l'une quelconque des revendications 7 à 9, dans lequel le matériau d'emballage comprend une couche de carton et une feuille de plastique fixée à la couche de carton, le procédé (700) comprenant :
la mise en place (S702) d'une section de scellage transversal du tube (112) de matériau d'emballage entre le dispositif générateur d'ultrasons (304) et l'enclume (500, 500') du système de scellage par ultrasons (300),
générer (S704), à l'aide du dispositif générateur d'ultrasons (304) du système de scellage par ultrasons (300), des vibrations ultrasonores de telle sorte que la feuille de plastique du matériau d'emballage dans la section de scellage transversale fonde au moins partiellement, et
presser (S706) le tube (112) dans la section de scellage transversale entre le dispositif générateur d'ultrasons (304) et l'enclume (500, 500'), de telle sorte qu'une pression s'exerce sur la section de scellage transversale (302), provoquant la liaison de la feuille de plastique, formant ainsi un scellage transversal.

13. Procédé (700) selon la revendication 12, comprenant en outre
la lecture (S708) d'une étiquette d'identification (ID) de bobine PM (120) sur une bobine PM (102) dans la machine d'emballage (100) à l'aide d'un lecteur d'identification de bobine PM (122),
la lecture (S710) d'une étiquette d'identification (ID) d'enclume (512) de l'enclume (500, 500') à l'aide d'un lecteur d'identification d'enclume (124),
la comparaison (S712) des données d'identification de l'enclume extraites de l'étiquette d'identification de l'enclume (512) et des données d'identification de la bobine PM extraites de l'étiquette d'identification de la bobine PM (120) dans une unité de commande (126),
en cas de non-correspondance entre les données d'identification de l'enclume et les données d'identification de la bobine PM, transmettre (S714) une notification de non-correspondance entre l'enclume et la bobine PM.

14. Produit logiciel comprenant des instructions qui, lorsque le programme est exécuté par un ordinateur, amènent l'ordinateur et la machine d'emballage selon l'une quelconque des revendications 10 à 11 à exécuter les étapes du procédé (700) des revendications 12 ou 13.
